# FASCICULE DE BREVET EUROPEEN

(11) **EP 2 271 828 B1**
(45) Date de publication et mention de la délivrance du brevet: **21.08.2019**
(21) Numéro de dépôt: 09742214.1
(22) Date de dépôt: 17.04.2009
(51) Int. Cl.: F01D 9/04, F01D 11/00, F01D 25/24, F01D 11/02

(54) **DISTRIBUTEUR DE TURBINE POUR UNE TURBOMACHINE**
TURBINENDÜSENKASTEN FÜR EINE TURBOMASCHINE
TURBINE NOZZLE BOX FOR A TURBOMACHINE

(30) Priorité: 24.04.2008 FR 0802293
(43) Date de publication de la demande: 12.01.2011
(73) Titulaire: Safran Aircraft Engines, 75015 Paris (FR)
(72) Inventeur: DIGARD BROU DE CUISSART, Sébastien, FR-75020 Paris (FR); HERZER, Eric, René, FR-78800 Houilles (FR); MATHIEU, David, FR-77500 Chelles (FR); RICHARD, Bruno, Marie, Benjamin, Jacques, FR-78570 Chanteloup Les Vignes (FR)
(74) Mandataire: Pichat, Thierry
(86) Numéro de dépôt international: PCT/FR2009/000457
(87) Numéro de publication internationale: WO 2009/136016

(56) Documents cités:
- EP-A- 0 017 534
- EP-A- 1 008 725
- EP-A- 1 847 687
- GB-A- 2 022 720

## Description

La présente invention concerne un distributeur de turbine pour une turbomachine telle qu'un turboréacteur ou un turbopropulseur d'avion.

Le document EP-A-0 017 534 décrit une garniture d'étanchéité amovible pour segment de distributeur de turbomachine. Le document GB2022720 divulgue un dispositif de fixation d'une garniture d'étanchéité de turbomachine.

Une turbomachine comprend des étages de turbine comportant chacun une roue de rotor à aubes et un distributeur, chaque distributeur étant sectorisé, c'est-à-dire formé de plusieurs secteurs de distributeur disposés circonférentiellement bout à bout.

Chaque distributeur comporte deux plates-formes annulaires coaxiales s'étendant l'une à l'intérieur de l'autre et reliées entre elles par des pales sensiblement radiales. La plate-forme externe comporte des moyens d'accrochage sur un carter externe de la turbine et la plate-forme interne est reliée à une cloison annulaire sensiblement radiale qui porte des éléments en matériau abradable, situés radialement à l'intérieur de la plate-forme interne du distributeur. Les éléments en matériau abradable coopèrent avec des léchettes annulaires portées par le rotor de la turbine pour former des joints d'étanchéité du type à labyrinthe.

Lorsque les éléments en matériau abradable sont usés, il est nécessaire de les remplacer par des neufs lors d'une opération de maintenance. Dans la technique actuelle, ces éléments sont fixés par brasage sur la cloison annulaire de la plate-forme interne du distributeur. Le remplacement des éléments en matériau abradable nécessite un démontage complet des secteurs du distributeur, un usinage de chaque secteur de distributeur pour enlever les éléments abradables usés, et le brasage d'éléments abradables neufs sur la cloison annulaire. Il est ensuite nécessaire de déposer un revêtement anti-oxydation sur chaque secteur de distributeur. Cette opération de remplacement des éléments abradables d'un distributeur est donc longue et coûteuse.

Par ailleurs, les secteurs d'un distributeur sont séparés les uns des autres par de faibles jeux en direction circonférentielle pour autoriser des dilatations thermiques de leurs plates-formes en fonctionnement. Ils sont de plus soumis en fonctionnement à des vibrations et à des sollicitations dynamiques relativement importantes qui peuvent entraîner des déplacements parasites et des déformations de ces secteurs.

On a déjà proposé de rigidifier le distributeur à l'aide de moyens d'appui axial formés sur les secteurs de plate-forme interne du distributeur, les moyens d'appui d'un secteur de plate-forme étant destinés à coopérer avec des moyens correspondants formés sur des secteurs de plate-forme interne adjacents pour limiter les déformations du distributeur en fonctionnement.

Dans la technique actuelle, ces moyens d'appui comportent un matériau très dur appelé « stellite » qui est déposé par un procédé de soudage laser (« stellitage ») long, coûteux, difficile à mettre en oeuvre, et qui risque de détériorer les secteurs de distributeur. Cette technologie n'est en outre pas réalisable sur certains distributeurs dont les plates-formes ont des formes trop complexes (appelées plates-formes 3D).

La présente invention a notamment pour but d'apporter une solution simple, efficace et économique aux problèmes de la technique antérieure, en simplifiant le remplacement des éléments en matériau abradable du distributeur, et en supprimant le stellitage des secteurs de ce distributeur.

Elle propose à cet effet un distributeur de turbine pour une turbomachine, ce distributeur étant sectorisé et formé de secteurs disposés bout à bout, et chaque secteur comprenant deux plates-formes annulaires coaxiales, respectivement interne et externe, reliées entre elles par des pales sensiblement radiales, la plate-forme interne étant reliée à une cloison annulaire sensiblement radiale, caractérisé en ce que la périphérie interne de la cloison annulaire de chaque secteur est festonnée ou crénelée et comprend des parties pleines en alternance avec des parties creuses, et en ce que des éléments en matériau abradable sont fixés sur un support annulaire continu qui comprend des moyens d'accrochage sur les cloisons annulaires des secteurs, le support pouvant coulisser circonférentiellement sur les cloisons et étant déplaçable angulairement entre une position de montage et de démontage et une position de blocage dans laquelle les moyens d'accrochage coopèrent avec les parties pleines des cloisons annulaires des secteurs pour assurer le maintien du support sur cette cloison.

Au contraire de la technique antérieure, le support des éléments abradables est selon l'invention monté de manière amovible sur la cloison, ce qui facilite le remplacement des éléments abradables usés. Il suffit en effet de faire tourner le support annulaire sur les cloisons des secteurs et de remplacer ce support par un nouveau support portant des éléments abradables neufs. Le remontage du support sur les cloisons des secteurs de distributeur est en outre simple et rapide car il peut s'effectuer sur un ensemble de distributeurs déjà en place dans la turbomachine.

L'invention permet également de simplifier la fabrication de chaque secteur de distributeur qui est obtenu de fonderie, car le support des abradables est désormais réalisé indépendamment de ces secteurs.

La cloison du distributeur est en outre allégée grâce à sa forme festonnée ou crénelée.

Le support annulaire n'est pas sectorisé et s'étend circonférentiellement sur tous les secteurs de distributeur, ce qui permet de rigidifier les secteurs de distributeur et de limiter leurs vibrations et leurs déplacements parasites en fonctionnement, tout en autorisant leurs dilatations circonférentielles. Il n'est donc plus nécessaire de déposer par stellitage un matériau dur sur les moyens d'appui axial des secteurs de distributeur, ce qui permet de faire l'économie de cette opération longue et coûteuse, et de supprimer le risque de détérioration des secteurs de distributeur lors de cette opération délicate.

Selon une autre caractéristique de l'invention, le support est en forme de rail et est réalisé en tôle, ce qui permet notamment d'alléger le distributeur de façon significative par rapport à la technique antérieure.

Les moyens d'accrochage peuvent définir des portions d'une gorge annulaire débouchant radialement vers l'extérieur et dans lesquelles sont logées les parties pleines des cloisons des secteurs de distributeur en position de blocage. Chacune de ces portions de gorge annulaire comprend avantageusement une extrémité circonférentielle ouverte pour l'engagement des moyens d'accrochage sur au moins une partie pleine d'une cloison d'un secteur de distributeur, et une extrémité circonférentielle opposée fermée de blocage en rotation dans un sens du support sur la cloison. Les moyens d'accrochage peuvent avoir en section une forme sensiblement en L ou en U, et être régulièrement répartis sur une circonférence du support. En position de montage, chaque cloison est de préférence maintenue serrée par les moyens d'accrochage de façon à limiter les vibrations du support en fonctionnement.

Les moyens d'accrochage sont de préférence réalisés en tôle et sont rapportés et fixés, par exemple par brasage ou soudage, sur le support annulaire. Les moyens d'accrochage sont par exemple formés par des tôles pliées.

Le nombre de parties pleines de la cloison est par exemple égal au nombre de secteurs de distributeur. Les parties pleines peuvent être formées aux extrémités circonférentielles des cloisons des secteurs de distributeur. La cloison de chaque secteur peut comprendre à chacune de ses extrémités circonférentielles une portion de partie pleine dont l'autre portion est formée sur une extrémité circonférentielle de la cloison d'un secteur de distributeur adjacent. Les parties pleines peuvent avoir une dimension ou un étendue angulaire en direction circonférentielle qui est inférieure ou égale à celle des parties creuses. Les moyens d'accrochage peuvent en outre avoir une dimension ou une étendue angulaire en direction circonférentielle qui est égale ou supérieure à celle des parties pleines des cloisons des secteurs.

Des déflecteurs annulaires en tôle peuvent en outre être fixés, par exemple par brasage, sur les cloisons des secteurs de distributeur. Ces déflecteurs annulaires sont destinés à coopérer avec des éléments correspondants des roues de rotor situées en amont et en aval du distributeur pour limiter le passage d'air en direction radiale entre le distributeur et ces roues de rotor.

L'invention concerne également des secteurs de distributeur pour un distributeur du type précité, comprenant deux plates-formes annulaires coaxiales, respectivement interne et externe, reliées entre elles par des pales sensiblement radiales, la plate-forme interne étant solidaire d'une cloison annulaire radialement interne, caractérisé en ce que la périphérie interne de la cloison est festonnée ou crénelée et comprend des parties pleines en alternance avec des parties creuses.

L'invention concerne encore un support annulaire continu pour un distributeur tel que décrit ci-dessus, caractérisé en ce qu'il comprend des moyens d'accrochage régulièrement répartis autour de l'axe du support et définissant des portions d'une gorge annulaire.

L'invention concerne en outre une turbine basse-pression de turbomachine, comprenant au moins un distributeur du type précité, ainsi qu'une turbomachine, telle qu'un turboréacteur ou un turbopropulseur d'avion, comprenant au moins un distributeur tel que décrit ci-dessus.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une demi-vue schématique en coupe axiale d'une turbine basse-pression de turbomachine,
- la figure 2 est une vue schématique partielle en perspective d'un secteur de distributeur, selon la technique antérieure à l'invention,
- la figure 3 est une vue schématique en perspective des moyens d'appui axial entre deux secteurs de distributeur adjacents de la technique antérieure,
- la figure 4 est une vue schématique partielle en perspective d'un distributeur selon l'invention,
- la figure 5 est une vue en coupe selon la ligne V-V de la figure 4, à plus grande échelle,
- la figure 6 est une vue schématique partielle en perspective d'un secteur de distributeur et d'un support d'abradables selon l'invention,
- la figure 7 est une vue à plus grande échelle d'une partie de la figure 6 et représente des moyens d'accrochage du support d'abradables selon l'invention, et
- la figure 8 est une vue schématique en perspective des moyens d'accrochage de la figure 6.

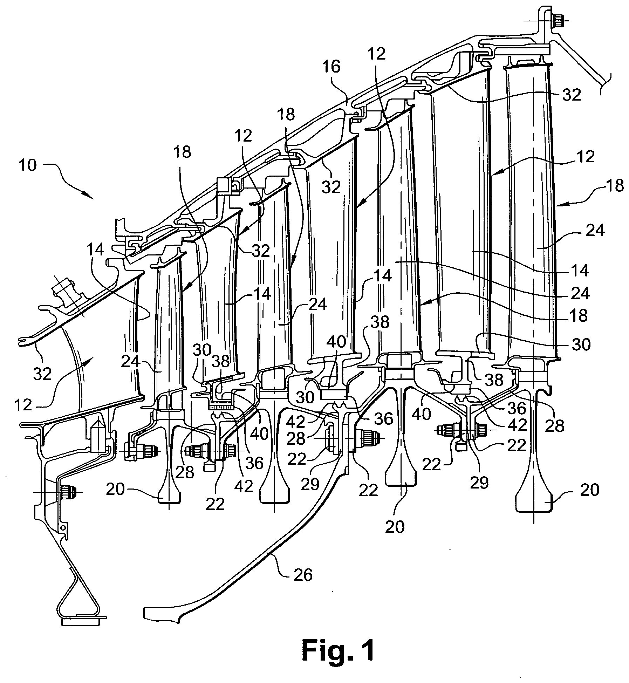

On se réfère d'abord à la figure 1 qui représente une turbine basse-pression 10 de turbomachine comprenant quatre étages comportant chacun un distributeur 12 porté par un carter externe 16 de la turbine et une roue à aubes 18 située en aval du distributeur 12.

Les roues 18 comprennent des disques 20 assemblés coaxialement par des brides annulaires 22 et portant des aubes 24 sensiblement radiales. Ces roues 18 sont reliées à un arbre de turbine (non représenté) par l'intermédiaire d'un cône d'entraînement 26 fixé sur des brides annulaires 22 des disques.

Des flasques annulaires 28 de retenue axiale des aubes 24 sur les disques 20 sont montés entre les disques et comprennent chacun une paroi radiale interne 29 serrée axialement entre les brides annulaires 22 de deux disques adjacents.

Les distributeurs 12 comprennent chacun deux plates-formes annulaires 30, 32 coaxiales, respectivement interne et externe, qui délimitent entre elles la veine annulaire d'écoulement des gaz dans la turbine et entre lesquelles s'étendent des pales fixes 14 sensiblement radiales. Les plates-formes externes 32 des distributeurs sont accrochées par des moyens appropriés sur le carter externe 16 de la turbine.

La plate-forme interne 30 de chaque distributeur est solidaire d'une cloison annulaire 38 radialement interne portant des éléments annulaires 36 en matériau abradable, ces éléments 36 étant agencés sur une surface cylindrique de la cloison annulaire 38. Dans l'exemple représenté, la cloison annulaire 38 est sensiblement radiale et sa périphérie externe est reliée à la surface interne de la plate-forme interne 30 du distributeur. Les éléments abradables 36 sont fixés sur la périphérie cylindrique interne de la cloison annulaire 38.

Les éléments abradables 36 sont agencés radialement à l'extérieur et en regard de léchettes annulaires externes 42 portées par les flasques 28. Les léchettes 42 sont destinées à coopérer par frottement avec les éléments 36 de façon à former des joints à labyrinthe et à limiter le passage de gaz en direction axiale à travers ces joints.

Les distributeurs 12 de la turbine sont sectorisés et sont chacun formés de plusieurs secteurs disposés circonférentiellement bout à bout autour de l'axe longitudinal de la turbine.

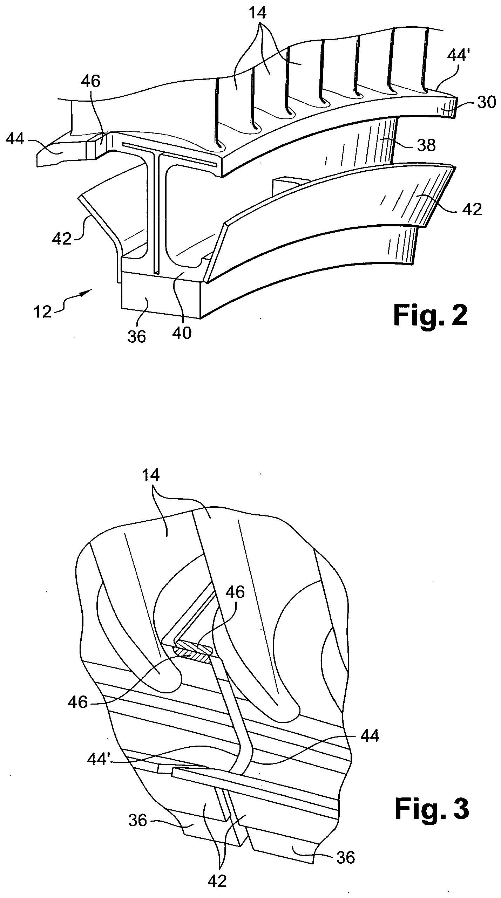

On a représenté en figure 2 une partie d'un secteur de distributeur 12 selon la technique antérieure à la présente invention. Ce secteur de distributeur 12 comprend un secteur de plate-forme interne 30 et un secteur de plate-forme externe (non visible) reliés entre eux par sept pales 14. Le secteur de plate-forme interne 30 est solidaire d'un secteur de cloison 38 portant des éléments abradables 36. Le secteur de plate-forme 30 et le secteur de cloison 38 sont formés d'une seule pièce de fonderie.

Dans la technique actuelle, les éléments abradables 36 sont fixés par brasage sur la périphérie interne du secteur de cloison 38. Des déflecteurs annulaires 42 en tôle sont en outre fixés par brasage sur la périphérie interne du secteur de cloison 38, en amont et en aval des éléments abradables 36. Ces déflecteurs 42 coopèrent par effet de chicane avec des moyens correspondants des roues à aubes 18 situées en mont et en aval du distributeur pour limiter le passage de gaz en direction radiale entre le distributeur et ces roues à aubes.

Le remplacement des éléments abradables 36 est dans ce cas une opération longue et coûteuse, comme cela a été indiqué dans ce qui précède.

Les bords longitudinaux 44, 44' du secteur de plate-forme interne 30 de chaque secteur de distributeur 12 ont à leurs extrémités circonférentielles des formes complémentaires des bords longitudinaux correspondants des secteurs de plates-formes internes des secteurs de distributeur adjacents, de façon à ce que les extrémités des bords longitudinaux s'encastrent circonférentiellement les unes dans les autres au montage de ce distributeur (figure 3).

Dans la technique actuelle, les extrémités des bords longitudinaux 44, 44' des secteurs de plate-forme interne 30 sont usinées en Z pour définir des moyens 46 d'appui axial entre les secteurs de distributeur 12. L'appui axial d'un secteur de plate-forme interne 30 sur un secteur de plate-forme interne adjacent permet de limiter les déplacements parasites et les vibrations des secteurs de distributeur 12 en fonctionnement de la turbine.

Les moyens d'appui 46 comportent un matériau dur appelé « stellite » déposé par un procédé long, coûteux, et difficile à mettre en oeuvre, comme cela a également été décrit dans ce qui précède.

L'invention permet de remédier au moins en partie aux problèmes indiqués ci-dessus grâce à un support annulaire 140 non sectorisé qui est accroché de manière amovible sur la cloison annulaire 138 du distributeur et qui porte les éléments 136 en matériau abradable.

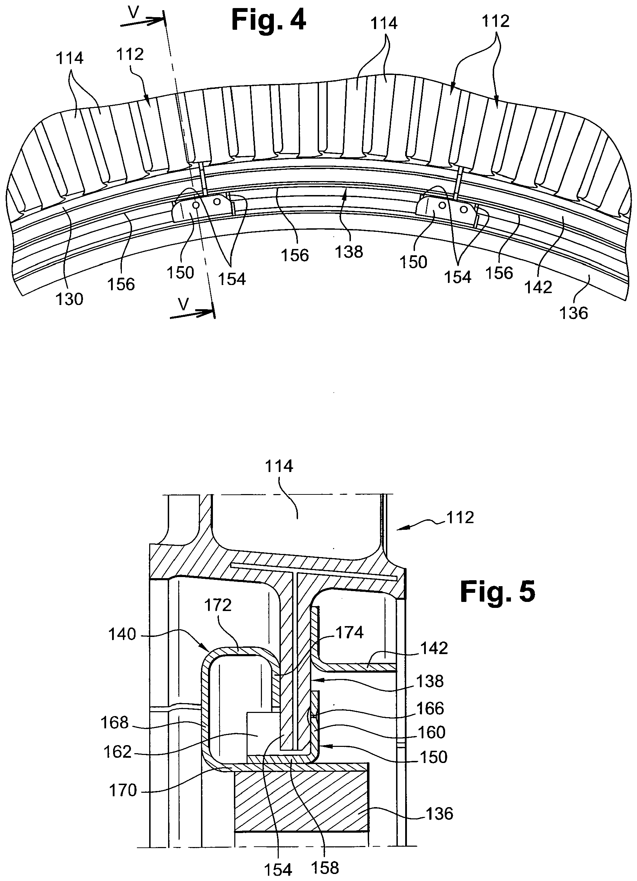

Dans l'exemple de réalisation représenté aux figures 4 à 8, le support annulaire 140 est en forme de rail et est réalisé en tôle, par exemple en tôle emboutie.

Le support 140 s'étend sur 360° et permet de rigidifier l'ensemble des secteurs de distributeur 112 dont les extrémités circonférentielles peuvent être dépourvues de stellite. Les extrémités des bords longitudinaux 144, 144' des secteurs de plate-forme interne de chaque distributeur peuvent être conformées en Z, comme dans la technique antérieure, pour conserver les surfaces d'appui axial, ou bien être en coupe droite pour supprimer ces surfaces d'appui axial.

Selon la présente invention, le support annulaire 140 comporte des moyens d'accrochage 150 définissant au moins en partie une gorge annulaire débouchant radialement vers l'extérieur et dans laquelle est engagée la périphérie interne d'une cloison radiale 138 d'un secteur de distributeur, qui est festonnée ou crénelée. Le support 140 est monté et démonté de la périphérie interne de la cloison 138 de façon simple et rapide, comme cela sera décrit plus en détail dans ce qui suit, ce qui permet de faciliter le remplacement des éléments abradables 136 lorsqu'ils sont usés.

La périphérie interne de la cloison 138 de chaque secteur de distributeur 112 comprend des parties pleines 154 en alternance avec des parties creuses 156, les parties pleines 154 étant régulièrement réparties autour de l'axe du distributeur.

Dans l'exemple représenté, les parties pleines 154 sont situées au niveau des parties d'extrémité circonférentielle des secteurs de distributeur 112. Chaque partie pleine 154 comprend une demi-portion formée sur une extrémité d'un secteur de cloison 138 d'un secteur de distributeur, et une demi-portion complémentaire formée sur l'extrémité d'un secteur de cloison d'un secteur de distributeur adjacent. La cloison 138 de chaque secteur comporte donc ici une seule partie creuse 156 qui s'étend sur une partie médiane de cette cloison.

Les parties pleines 154 peuvent avoir une dimension ou une étendue angulaire en direction circonférentielle représentant environ 10 à 30% de celle d'un secteur de distributeur 112.

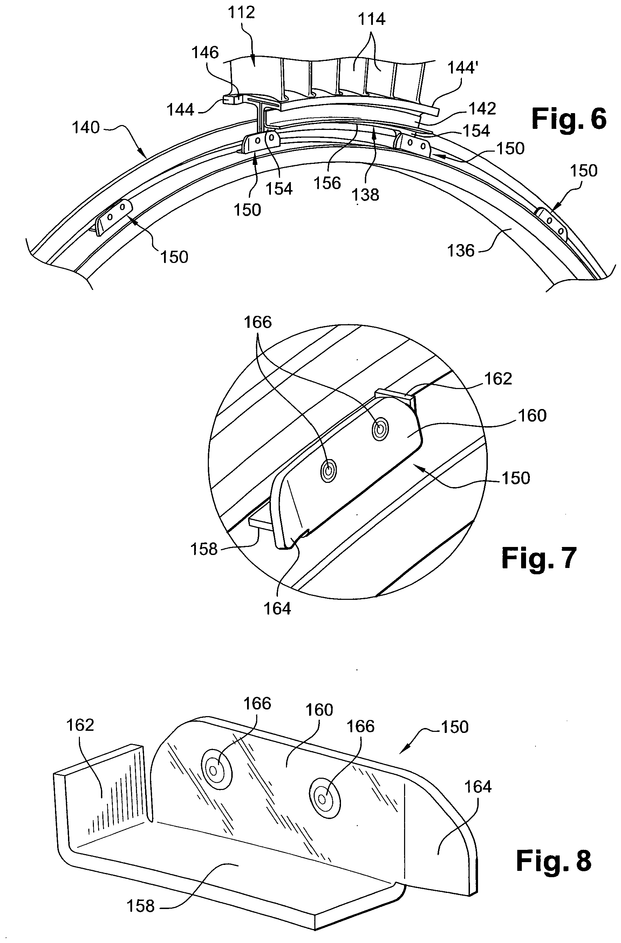

La cloison de chaque secteur de distributeur porte en outre des déflecteurs annulaires 142 du type précité qui sont fixés par brasage ou soudage sur au moins une des faces latérales de la cloison 138. Ces déflecteurs 142 sont situés radialement à l'extérieur des parties creuses 156 pour ne pas gêner le montage du support 140 sur la cloison 138 (figure 6).

Le support 140 a dans l'exemple représenté (figure 5) une forme sensiblement en C en section et comporte une paroi annulaire radiale 168 reliée à ses périphéries interne et externe à des parois cylindriques interne 170 et externe 172, respectivement. La partie d'extrémité axiale de la paroi cylindrique externe 172, située du côté opposé à la paroi radiale, est pliée vers l'intérieur de façon à former un rebord annulaire radial 174 s'étendant vers l'intérieur depuis la paroi externe 172.

Les éléments 136 en matériau abradable sont fixés sur la surface cylindrique interne de la paroi 170 du support 140, et les moyens d'accrochage 150 sont fixés sur la surface cylindrique externe de cette paroi 170 du support.

Dans l'exemple représenté, les moyens d'accrochage ont en section une forme sensiblement en L et sont réalisés par des tôles pliées. Ils comprennent chacun deux ailes 158, 160 (figures 7 et 8).

Une première aile 158 est de forme générale cylindrique centrée sur l'axe du support 140 et est appliquée et fixée, par exemple par soudage, sur la surface externe de la paroi 170 de ce support 140. La seconde aile 160 s'étend radialement vers l'extérieur depuis son extrémité reliée à la première aile 158, sensiblement parallèlement au rebord annulaire 174 du support (figure 5).

Les moyens d'accrochage 150 définissent des portions d'une gorge annulaire dans lesquelles sont reçues les parties pleines 154 des cloisons 138. Chaque portion est ouverte à une extrémité circonférentielle et fermée à son extrémité circonférentielle opposée. Cette extrémité fermée est obtenue dans l'exemple représenté par pliage d'une extrémité circonférentielle de la première aile 158 de façon à former un rebord radial 162 formant butée en direction circonférentielle. Cette butée est destinée à retenir le support 140 dans un sens en direction circonférentielle sur le distributeur par appui circonférentiel du rebord 162 sur une partie pleine 154 adjacente de la cloison 138.

La seconde aile 160 a son extrémité circonférentielle opposée au rebord 162 qui est également pliée du côté opposé au support 140 pour former un rebord 164 de guidage du support lors de son montage sur les cloisons 138.

Cette seconde aile 160 comporte en outre des bossages 166 qui sont formés en saillie sur la face de cette aile située sensiblement en regard du rebord annulaire 174 du support 140. Ces bossages 166 sont formés par déformation plastique de la seconde aile 160 dans l'exemple représenté. Ils permettent de maintenir axialement serrées les parties pleines 154 des cloisons qui sont intercalées entre le rebord 174 du support annulaire 140 et les secondes ailes 160 des moyens d'accrochage (figure 5), de façon à limiter les vibrations du support 140 en fonctionnement.

Les faces radialement externes des premières ailes 158 des moyens d'accrochage 150 peuvent venir en appui radial sur les extrémités radialement internes des parties pleines 154 des cloisons pour assurer le centrage du support 140 vis-à-vis du distributeur.

Les moyens d'accrochage 150 ont une dimension ou étendue angulaire en direction circonférentielle qui est par exemple égale, et de préférence supérieure, à celle des parties pleines 154 des cloisons des secteurs de distributeur, et qui est inférieure à celle des parties creuses 156 de ces cloisons. Les extrémités radialement externes des secondes ailes 160 des moyens d'accrochage 150 définissent un diamètre qui est légèrement inférieur à celui défini par les fonds des parties creuses 156 des cloisons et à celui défini par les surfaces radialement internes des déflecteurs 142 (figure 4). De cette façon, les moyens d'accrochage 150 peuvent être engagés dans les parties creuses 156 des cloisons 138 des secteurs de distributeur lorsque le support 140 est aligné axialement avec le distributeur 112 et est amené en translation axiale sur le distributeur. Les parties creuses 156 ont une dimension ou étendue angulaire en direction circonférentielle qui est par exemple supérieure à celle des parties pleines 154.

Le support annulaire 140 est accroché sur les secteurs de distributeur 112 de la façon suivante. Les secteurs de distributeur 112 sont disposés circonférentiellement bout à bout. Le support 140 est aligné coaxialement avec le distributeur sectorisé 112 et les moyens d'accrochage 150 du support sont alignés axialement avec les parties creuses 156 de la cloison 138 du distributeur 112. Le support 140 est ensuite déplacé en translation axiale vers le distributeur jusqu'à ce que le rebord annulaire 174 du support soit en appui axial contre les cloisons annulaires 138 du distributeur. Dans cette position, appelée position de montage et de démontage, les moyens d'accrochage 150 sont situés au niveau des parties creuses 156 de la cloison et sont sensiblement alignés en direction circonférentielle avec les parties pleines 154 de cette cloison. Le support 140 est alors tourné dans un sens en direction circonférentielle par rapport au distributeur jusqu'à ce que les parties pleines 154 de la périphérie interne des cloisons 138 pénètrent dans les moyens d'accrochage 150. Les parties pleines 154 glissent en direction circonférentielle sur les rebords 164 qui les guident dans les moyens d'accrochage 150. Le support 140 glisse circonférentiellement sur les cloisons jusqu'à ce que les parties pleines 154 des cloisons 138 viennent en butée sur les rebords 162 des moyens d'accrochage 150. Les opérations précitées sont réalisées en ordre contraire pour le démontage du distributeur, et pour le remplacement du support 140 ou des éléments abradables 136 de ce support.

## Revendications

1. Distributeur (112) de turbine pour une turbomachine, ce distributeur étant sectorisé et formé de secteurs disposés bout à bout, et chaque secteur comprenant deux plates-formes annulaires coaxiales, respectivement interne (130) et externe, reliées entre elles par des pales (114) sensiblement radiales, la plate-forme interne étant reliée à une cloison annulaire (138) sensiblement radiale, la périphérie interne de la cloison annulaire de chaque secteur étant festonnée ou crénelée et comprenant des parties pleines (154) en alternance avec des parties creuses (156), le distributeur comprenant des éléments en matériau abradable et un support annulaire, les éléments en matériau abradable étant fixés sur le support annulaire (140), **caractérisé en ce que** le support annulaire s'étend en continu sur 360°, et comprend des moyens (150) d'accrochage sur les cloisons annulaires des secteurs, le support annulaire étant configuré pour coulisser circonférentiellement sur les cloisons et pour être déplaçable angulairement entre une position de montage et de démontage et une position de blocage dans laquelle les moyens d'accrochage coopèrent avec les parties pleines des cloisons annulaires des secteurs pour assurer le maintien du support sur cette cloison.

2. Distributeur selon la revendication 1, **caractérisé en ce que** le support (140) est en forme de rail et est réalisé en tôle.

3. Distributeur selon la revendication 1 ou 2, **caractérisé en ce que** les moyens d'accrochage (150) définissent des portions d'une gorge annulaire débouchant radialement vers l'extérieur et dans lesquelles sont logées les parties pleines (154) des cloisons annulaires des secteurs en position de blocage.

4. Distributeur selon la revendication 3, **caractérisé en ce que** chaque portion de gorge annulaire comprend une extrémité circonférentielle ouverte pour l'engagement des moyens d'accrochage sur au moins une partie pleine (154) de la cloison, et une extrémité circonférentielle opposée fermée de blocage en rotation dans un sens du support sur la cloison.

5. Distributeur selon l'une des revendications précédentes, **caractérisé en ce que** les moyens d'accrochage (150) ont en section une forme sensiblement en L ou en U et sont régulièrement répartis sur une circonférence du support.

6. Distributeur selon l'une des revendications précédentes, **caractérisé en ce que** les moyens d'accrochage (150) sont réalisés en tôle et sont rapportés et fixés, par exemple par brasage ou soudage, sur le support annulaire (140).

7. Distributeur selon l'une des revendications précédentes, **caractérisé en ce que** les parties pleines (154) sont formées aux extrémités circonférentielles des cloisons (138) des secteurs de distributeur (112).

8. Distributeur selon la revendication 7, **caractérisé en ce que** la cloison de chaque secteur comprend à chacune de ses extrémités circonférentielles une portion de partie pleine dont l'autre portion est formée sur une extrémité circonférentielle de la cloison d'un secteur de distributeur adjacent.

9. Distributeur selon l'une des revendications précédentes, **caractérisé en ce que** les moyens d'accrochage (150) ont une dimension ou une étendue angulaire en direction circonférentielle qui est égale ou supérieure à celle des parties pleines des cloisons des secteurs.

10. Distributeur selon l'une des revendications précédentes, **caractérisé en ce que** des déflecteurs annulaires (142) en tôle sont fixés, par exemple par brasage, sur la cloison.

11. Turbine basse-pression de turbomachine, **caractérisée en ce qu'**elle comprend au moins un distributeur (112) selon l'une des revendications 1 à 10.

12. Turbomachine, telle qu'un turboréacteur ou un turbopropulseur d'avion, **caractérisée en ce qu'**elle comprend au moins un distributeur (112) selon l'une des revendications 1 à 10.

## Patentansprüche

1. Turbinenleitkranz (112) für ein Turbinentriebwerk, wobei dieser Turbinenleitkranz segmentiert ist und gebildet wird aus aneinander grenzenden Segmenten, und jedes Segment zwei koaxiale ringförmige Plattformen jeweils innen (130) und außen umfasst, die durch im wesentlichen radiale Schaufeln (114) miteinander verbunden sind, wobei die innere Plattform mit einer im Wesentlichen radialen ringförmigen Trennwand (138) verbunden ist, wobei der Innenrand der ringförmigen Trennwand jedes Segments mit einer geschweiften Kante versehen oder gezahnt ist und im Wechsel massive Teile (154) und hohle Teile (156) umfasst, wobei der Leitkranz Elemente aus Abriebmaterial und eine ringförmige Halterung umfasst, wobei die Elemente aus Abriebmaterial auf der ringförmigen Halterung (140) befestigt sind, **dadurch gekennzeichnet, dass** sich die ringförmige Halterung durchgängig um 360° erstreckt und Mittel zur Befestigung an den ringförmigen Trennwänden der Segmente umfasst, wobei die ringförmige Halterung so gestaltet ist, dass sie am Umfang der Trennwände entlang gleitet und winkelförmig zwischen einer Montage- und Demontageposition und einer Sperrposition, in welcher die Befestigungsmittel mit den massiven Teilen der ringförmigen Trennwände der Segmente zur Gewährleistung des Halts der Halterung auf dieser Trennwand zusammenwirken, verschoben werden kann.

2. Leitkranz nach Anspruch 1, **dadurch gekennzeichnet, dass** die Halterung (140) schienenförmig ist und aus Blech besteht.

3. Leitkranz nach Anspruch 1 oder 2, **dadurch gekennzeichnet, dass** die Befestigungsmittel (150) die Abschnitte einer radial nach außen führenden Ringnut abgrenzen, in denen die massiven Teile (154) der ringförmigen Trennwände der Segmente in der Sperrposition aufgenommen werden.

4. Leitkranz nach Anspruch 3, **dadurch gekennzeichnet, dass** jeder Abschnitt der Ringnut ein offenes Umfangsende umfasst, in welches die Befestigungsmittel auf zumindest einem massiven Teil (154) der Trennwand eingreifen, und ein entgegengesetztes Umfangsende, das in Richtung der Halterung auf der Trennwand drehgesichert geschlossen ist.

5. Leitkranz nach einem der vorhergehenden Ansprüche, **dadurch gekennzeichnet, dass** die Befestigungsmittel (150) einen im Wesentlichen L- oder U-förmigen Querschnitt haben und gleichmäßig über einen Umfang der Halterung verteilt sind.

6. Leitkranz nach einem der vorhergehenden Ansprüche, **dadurch gekennzeichnet, dass** die Befestigungsmittel (150) aus Blech hergestellt sind und zum Beispiel durch Löten oder Schweißen an der ringförmigen Halterung (140) angesetzt und fixiert werden.

7. Leitkranz nach einem der vorhergehenden Ansprüche, **dadurch gekennzeichnet, dass** die massiven Teile (154) an den Umfangsenden der Trennwände (138) der Segmente des Leitkranzes (112) gebildet werden.

8. Leitkranz nach Anspruch 7, **dadurch gekennzeichnet, dass** die Trennwand jedes Segments an jedem ihrer Umfangsenden einen Abschnitt eines vollen Teils umfasst, dessen anderer Abschnitt an einem Umfangsende der Trennwand eines daneben liegenden Leitkranzsegments gebildet wird.

9. Leitkranz nach einem der vorhergehenden Ansprüche, **dadurch gekennzeichnet, dass** die Befestigungsmittel (150) eine Größe oder eine Winkelausdehnung in Umfangsrichtung haben, die größer gleich der Größe oder Winkelausdehnung der massiven Teile der Trennwände der Segmente ist.

10. Leitkranz nach einem der vorhergehenden Ansprüche, **dadurch gekennzeichnet, dass** die ringförmigen Leitbleche (142) aus Blech zum Beispiel durch Löten an der Trennwand befestigt sind.

11. Niederdruckturbine eines Turbinentriebwerks, **dadurch gekennzeichnet, dass** sie zumindest einen Leitkranz (112) nach einem der Ansprüche 1 bis 10 umfasst.

12. Turbinentriebwerk, wie zum Beispiel ein Turbostrahltriebwerk oder ein Propellerturbotriebwerk eines Flugzeugs, **dadurch gekennzeichnet, dass** es zumindest einen Leitkranz (112) nach einem der Ansprüche 1 bis 10 umfasst.

## Claims

1. A turbine nozzle (112) for a turbomachine, the nozzle being sectorized and made up of sectors placed end to end, and each sector comprising two annular platforms that are coaxial, respectively an inner platform (130) and an outer platform, which platforms are connected together by substantially radial vanes (114), the inner platform being connected to a substantially radial annular partition (138), the inner periphery of the annular partition of each sector being festooned or crenellated and comprising solid portions (154) alternating with hollow portions (156), the nozzle comprising elements of abradable material and a annular support (140), the elements of abradable material being attached to the annular support (140), charaterized in that the annular support extends continuously over 360°, and comprises fastener means (150) for fastening to the annular partitions of the sectors, the support being capable of sliding circumferentially over the partitions and being movable angularly between a mounting-and-dismounting position and a locking position in which the fastener means co-operate with the solid portions of the annular partitions of the sectors in order to hold the support on the partition.

2. A nozzle according to claim 1, **characterized in that** the support (140) is in the form of a rail and is made of sheet metal.

3. A nozzle according to claim 1 or claim 2, **characterized in that** the fastener means (150) define annular groove portions that are open radially outwards and in which there are received the solid portions (154) of the annular partitions of the sectors in the locking position.

4. A nozzle according to claim 3, **characterized in that** each annular groove portion has one circumferential end that is open for engaging the fastener means on at least one solid portion (154) of the partition, and an opposite circumferential end that is closed to prevent the support turning in one direction over the partition.

5. A nozzle according to any preceding claim, **characterized in that** the fastener means (150) present a section that is substantially L- or U-shaped, and are regularly distributed around a circumference of the support.

6. A nozzle according to any preceding claim, **characterized in that** the fastener means (150) are made of sheet metal and are fitted to the annular support (140) and fastened thereto, e.g. by brazing or welding.

7. A nozzle according to any preceding claim, **characterized in that** the solid portions (154) are formed at the circumferential ends of the partitions (138) of the sectors of the nozzle (112).

8. A nozzle according to claim 7, **characterized in that** the partition of each sector includes at each of its circumferential ends one fraction of a solid portion having its other fraction formed by a circumferential end of the partition of an adjacent sector of the nozzle.

9. A nozzle according to any preceding claim, **characterized in that** the fastener means (150) present an annular extent or dimension in a circumferential direction that is equal to or greater than the corresponding dimension of the solid portions of the partitions of the sectors.

10. A nozzle according to any preceding claim, **characterized in that** annular deflectors (142) of sheet metal are fastened to the partition, e.g. by brazing.

11. A low pressure turbine for a turbomachine, the turbine being **characterized in that** it includes at least one nozzle (112) according to any one of claims 1 to 10.

12. A turbomachine, such as an airplane turboprop or turbojet, **characterized in that** it includes at least one nozzle (112) according to any one of claims 1 to 10.
